# EUROPEAN PATENT APPLICATION

(11) **EP 4 223 108 A1**
(43) Date of publication of application: **09.08.2023**
(21) Application number: 22210405.1
(22) Date of filing: 30.11.2022
(51) Int. Cl.: A01G 20/30, A01D 34/00, G05D 1/02

(54) **LAWN MOWER ROBOT AND CORRESPONDING PROCESS**

(30) Priority: 03.02.2022 IT 202200001850
(71) Applicant: Bernini, Fabrizio, 52021 Bucine - Arezzo (IT)
(72) Inventor: Bernini, Fabrizio, 52021 Bucine - Arezzo (IT)
(74) Representative: Milli, Simone

(57) **Abstract**

The invention concerns a lawn mower robot (1) which comprises grass cutting means (2) for performing an operation for cutting grass, movement means (3) configured for moving the lawn mower robot (1), a device (4) of the GPS type, configured for deriving coordinates regarding a GPS position of the robot (1), at least one sensor (5) configured for detecting the presence of grass and/or obstacles (6) in a cutting zone (A) and a processing module (7), coupled to the sensor (5) and to the GPS type device (4) in order to derive, by means of said sensor (5), a plurality of points (P) belonging to edges of a cutting zone (A) or defining obstacles (6) in the cutting zone (A), and associating with said points (P) GPS coordinates derived using the GPS type device (4).

## Description

This invention relates to the technical sector of automatic gardening devices, in particular lawn mower devices.

The lawn mower devices are used to keep lawns, gardens and grassy areas in general in optimum conditions, that is to say, for keeping the grass below a certain height in a substantially homogeneous manner over the entire cutting area.

Lawn mower robots of known type generally comprise a load-bearing frame, often having an outer body, to which are associated cutting means for the maintenance of the lawn and robot movement means for moving the robot inside a working area.

To allow the autonomous movement of the robot inside the working area, without it escaping, according to a prior art technique a perimeter wire is installed which delimits the space inside of which the robot can move. When the robot moves towards the perimeter wire, suitable sensors detect the presence indicating that the boundary of the area inside which the cutting operation can/must be performed has been reached, so that the robot can modify its direction.

Moreover, it is always necessary to delimit with the perimeter wire all those obstacles present inside the working area which the robot must avoid, including, for example, trees, shrubs, flower beds, swimming pools or furnishing elements for gardens.

It is therefore evident that this requirement is particularly onerous since it necessarily requires the installation of one or more perimeter wires positioned to delimit in a precise and accurate manner the space inside of which the robot can actually move and operate.

There are also prior art systems which use GPS localisation technology in such a way as to overcome the above-mentioned problems.

However, these prior art systems comprise, during installation, a necessary initial mapping of the working area and obstacles inside it to be loaded in the lawn mower robot.

Performing the initial mapping of the working area may be a not simple operation and also makes the lawn mower robot, in use, not very flexible. In effect, the robot generally maintains, for its movement, the fixed references which it obtains from this mapping.

Moreover, these systems are affected by a significant reduction in the precision of the GPS signal close to certain elements, for example plants, walls or hedges.

In this context, the technical purpose which forms the basis of the invention is to provide a lawn mower robot, and a mapping process, which helps overcome one or more of the above-mentioned drawbacks of the prior art. In particular, the aim of the invention is to provide a flexible lawn mower robot which is able to adapt and move autonomously inside the working area, avoiding the risk of striking any obstacles present inside the working area.

A further aim of the invention is to provide a lawn mower robot which is simple to use, but at the same time reliable and precise.

Yet another aim is to provide a process for map a cutting zone which is simple to use, but at the same time reliable and precise.

The features of the invention are clearly described in the claims below and its advantages are more apparent from the detailed description which follows, with reference to the accompanying drawings which illustrate a preferred, non-limiting example embodiment of the invention and in which:
- Figure 1 is a schematic view of an embodiment of the lawn mower robot according to the invention;

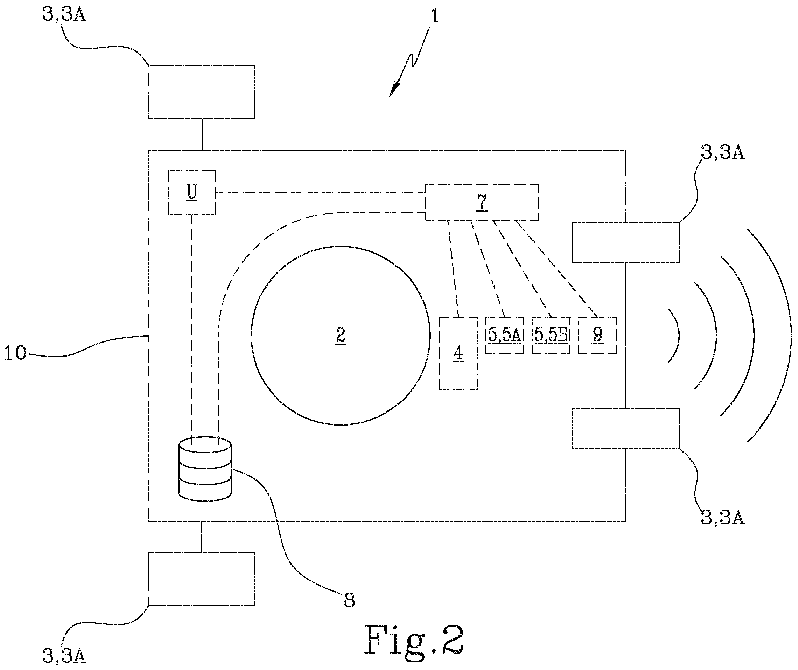

- Figure 2 is a schematic view from below of the lawn mower robot of Figure 1.

It should be noted that the drawings are schematic representations and do not therefore represent the actual dimensions.

With reference to the accompanying drawings, the numeral 1 denotes a lawn mower robot.

In this description, for brevity, reference will be made to the lawn mower robot 1 simply as the robot 1.

According to the invention, the robot 1 comprises a frame 10 for supporting the components of the robot 1.

The robot 1 comprises grass cutting means 2, coupled to the supporting frame 10, configured to perform an operation for cutting grass inside a cutting zone A.

The cutting zone A may be, for example, a garden, a park or in general a lawn.

The grass cutting means 2 face towards the grass and comprise grass cutting elements, for example, one or more blades.

According to an aspect of the invention, the cutting means 2 comprise an actuator, not illustrated in the accompanying drawings, configured for moving said grass cutting elements.

According to the invention, the robot 1 comprises movement means 3, coupled to the supporting frame 10, configured for moving the robot 1. According to this invention, the robot 1 comprises a device 4 of the GPS type.

The GPS type device 4 is configured to derive coordinates regarding a GPS position of the robot 1.

Advantageously, deriving the coordinates (GPS) makes it possible to detect the position (GPS) of the robot 1 during the cutting operations or in general during its movement.

According to a preferred embodiment, the GPS type device 4 is of the RTK (Real Time Kinematics) type.

Advantageously, a GPS type device 4 which uses RTK technology, that is to say, measurements of satellite data with respect to a ground station, makes it possible to obtain information with a greater degree of precision compared with the standard GPS systems.

The cutting zone A may have a plurality of obstacles 6.

The obstacles 6 are, for example, trees, bushes, flower beds, swimming pools or furnishing elements for gardens.

According to this invention, the robot 1 comprises at least one sensor 5, preferably of the radar type or of the ultrasound type, configured to detect the presence of grass and/or obstacles 6 in the cutting zone A. It should be noted that the presence of a point P of discontinuity between presence and absence of grass in the cutting zone A corresponds to an edge or boundary point P of the cutting zone A.

According to a preferred embodiment, the robot 1 comprises a plurality of sensors 5, more specifically a first sensor 5A configured for detecting the presence of grass in the cutting zone A and a second sensor 5B configured for detecting the presence of obstacles 6 in the cutting zone A.

Preferably, the first sensor 5A is of the radar or ultrasound type. Preferably, the second sensor 5B is of the radar or ultrasound type.

It should be noted, more generally speaking, that the first sensor 5A or the second sensor 5B may be of any type, provided they are able to perform the respective functions for detecting the presence of grass and obstacles 6 in the cutting zone A.

Advantageously, a configuration with two sensors (5A, 5B), preferably of the radar or ultrasound type, makes it possible to optimise each single sensor with respect to what it is configured for detecting.

Advantageously, a configuration with two sensors (5A, 5B), preferably of the radar or ultrasound type, makes it possible to distinguish more easily if an edge of a cutting zone A or an obstacle 6 has been detected.

According to this invention, the robot 1 comprises a processing module 7. The processing module 7 is coupled to the sensor 5 (or to the plurality of sensors 5) and to the GPS type device 4.

The term "coupled" means that the sensor 5 and the GPS type device 4 are connected to, and in communication with, the processing module 7.

The processing module 7 is configured for deriving, by means of the sensor 5, a plurality of points P belonging to edges of a cutting zone A or defining obstacles 6 in the cutting zone A.

The expression "edges of a cutting zone" means the boundary between an area in which there is grass, that is to say, the cutting zone A, and an area in which there is no grass, for example a path or a wall.

In other words, the at least one sensor 5 is able to detect the presence or absence of grass and/or an obstacle 6 in the cutting zone A and the processing module 7, receiving the signal detected by the at least one sensor 5, is able to derive the points P of the cutting zone A wherein the sensor 5 has detected the presence of an obstacle 6 and/or the discontinuity with respect to the presence of grass.

The processing module 7 is configured to associate to these points P, derived by means of the sensor 5, GPS coordinates derived by the GPS type device 4.

Advantageously, associating GPS coordinates to the generic points P in which an edge of the cutting zone A or an obstacle 6 has been detected makes it possible to obtain a spatial localisation of the edge of the cutting zone A or of the obstacle 6.

According to an aspect of the invention, the robot 1 comprises a storage unit 8.

The storage unit 8 is connected to the processing module 7.

The storage unit 8 is configured for storing the derived points P, belonging to edges of a cutting zone A or defining obstacles 6 in the cutting zone A, and for also storing the GPS coordinates associated with said points P.

The storage unit 8 may be, for example, a database or a archive physically installed in the robot 1 or an external storage space, for example of the cloud type.

More specifically, in use, the information derived from the sensor 5, by the GPS type device 4 and processed by means of the processing module 7, relating to an edge of the cutting zone A or an obstacle 6 and the respective GPS position may be stored by the robot 1 in the storage unit 8 configured for this purpose.

The storage unit 8 is configured for storing the presence and the relative spatial localisation information relating to an edge or an obstacle 6.

In other words, the robot 1 knows in which position the obstacles are located inside the cutting zone A.

In particular, moreover, the processing module 7 is configured for associating together the plurality of points P relative to an edge of the cutting zone A and the respective GPS coordinates.

In other words, the processing module 7 is able, starting from the detections of the sensor 5 and of the GPS type device 4, to process a boundary line of the cutting zone A connecting together all the derived points P.

In short, the robot 1, by means of the processing module 7, is able to process a map of the cutting zone A thanks to the spatial localisation information relating to an edge or an obstacle 6 stored in the storage unit 8. Advantageously, a virtual map of the cutting zone A created autonomously by the robot 1 makes it possible to avoid the onerous operations common to the prior art for installing a perimeter wire in the cutting zone A or loading the map in the robot 1 before its use.

Advantageously, a map created autonomously by the robot 1 starting from GPS coordinates associated with points P detected by the robot 1 during its operational use is in itself an extremely precise map.

Advantageously, the configurations of the sensor 5, GPS type device 4, processing module 7 and storage unit 8 allow the robot 1 to constantly update the map of the cutting zone A with the new information stored starting from the derivation of new points P.

Advantageously, a map created autonomously by the robot 1 starting from GPS coordinates associated with points P detected by the robot 1 during its operational use allows the robot 1 to be flexible and adapt to possible modifications to the boundaries of the cutting zone A, the position of the obstacles 6 or the presence of new obstacles 6.

Advantageously, the possibility of constantly updating the map of the cutting zone A with new points P and the relative GPS position makes it possible to obtain increasingly precise information on the localisation of the obstacles 6 and of the edges of the cutting zone A.

According to a preferred embodiment, the storage unit 8 is configured for storing an edge point P corresponding to an edge or to an obstacle 6 if it (or a boundary of it) is derived for a predetermined number of times; this means that, in order to add a point P to the map, it must be traced several times, making the map more reliable.

According to an aspect of the invention, the GPS type device 4 is configured to derive also a precision of the GPS position of the robot 1.

The precision of the GPS position of the robot 1 is derived as a function of the error associated with the coordinates derived from the GPS type device 4.

In other words, the GPS type device 4 is configured to derive the coordinates regarding the GPS position of the robot 1 and at the same time also derive the precision of these coordinates and, therefore, of the GPS position.

According to an aspect of the invention, the processing module 7 is configured for associating to the points P derived by means of the sensor 5 also the precision of the GPS position of the robot 1.

Advantageously, knowing the precision of the GPS position of the robot 1 and associating it with the points P, derived by the sensor 5 and belonging to edges of a cutting zone A or defining obstacles 6 in the cutting zone A, makes it possible to know the degree of precision in locating the obstacles 6 inside the cutting zone A and the boundary of the cutting zone A. According to an aspect of the invention, the storage unit 8 is configured for also storing the precision of the GPS position of the robot 1 associated with said points P.

Advantageously, the storage of the precision of the GPS position of the robot 1 allows the robot 1 to know the degree of precision of the virtual map of the reconstructed cutting zone A.

According to a preferred embodiment, the processing module 7 is configured for assessing whether the derived precision of the GPS position of the robot 1 is less than a predetermined value.

The storage unit 8 is configured to reject the storage of a derived point P and the associated GPS coordinates if the precision of the GPS position is less than the predetermined value (preferably the predetermined value is between 5 cm and 15 cm).

According to an aspect of the invention, the movement means 3 are configured for moving the robot 1 along a feed direction X.

Preferably, the movement means 3 comprise a plurality of wheels 3A. Preferably, at least one wheel 3A is a drive wheel and the movement means 3 comprise a rotation motor (not illustrated), operatively connected to said at least one drive wheel.

Still more preferably, at least one wheel 3A is a wheel which can be oriented, that is to say, a wheel which is able to rotate about a substantially vertical axis of rotation, and the movement means 3 comprise an orientation motor (not illustrated) operatively connected to said at least one wheel which can be oriented.

In particular, the drive wheels allow the forward movement along the feed direction X, whilst the adjustable wheels change the feed direction X when necessary (for example, when obstacles are detected along the working trajectory or the edges of the area to be maintained are reached).

By way of example, and therefore non-limiting, the power supply of the robot 1, both with regard to the movement means 3 and the cutting means 2, may be performed by electric motors, powered by a battery; the latter may be of the rechargeable type.

Preferably, the battery may also power other electrical/electronic devices provided on the lawn mower robot 1.

According to an aspect of the invention, the robot 1 comprises a direction sensor 9 for detecting a direction vector corresponding to said feed direction X.

Advantageously, the sensor 9 makes it possible to know the feed direction X of the robot 1.

According to an aspect of the invention, the robot 1 comprises a control unit U, operatively connected to the processing module 7.

The control unit U is configured to control the movement means 3 as a function of the points P and the GPS coordinates stored in the storage unit 8.

The control unit U is configured to control the cutting means 2 as a function of the points P and the GPS coordinates stored in the storage unit 8.

In other words, on the basis of the GPS localisation of the points P corresponding to an edge of the cutting zone A or an obstacle 6, the control unit U is configured to control the movement of the robot 1 and to actuate or stop the cutting means 2.

More specifically, considering a preferred embodiment, upon detecting an obstacle 6 or an absence of grass by the sensors 5, the control unit U is configured for modifying the feed direction X of the robot 1 and/or stopping the cutting means 2.

In the presence of this detection, the processing module 7 is configured to associate the GPS coordinates derived from the GPS type device 4 to the points P derived from the sensors 5.

The storage unit 8 is configured for storing the points P and the GPS coordinates associated with them.

The processing module 7 is configured for associating the plurality of the points P stored and the respective GPS coordinates and for processing the spatial position of each obstacle 6 and for also processing the boundary line of the cutting zone A, that is to say, it is configured for making a map of the cutting zone A, starting from the information stored in the storage unit 8. Upon the detection, by the direction sensor 9, of the modification of the feed direction X, the control unit U is configured to actuate the cutting means 2. It should be noted that the configurations described in this preferred embodiment allow the robot 1 to store any type of edge or obstacle 6 inside the cutting zone A and to control the relative movement and its operation autonomously using the movement means 3 and the cutting means 2.

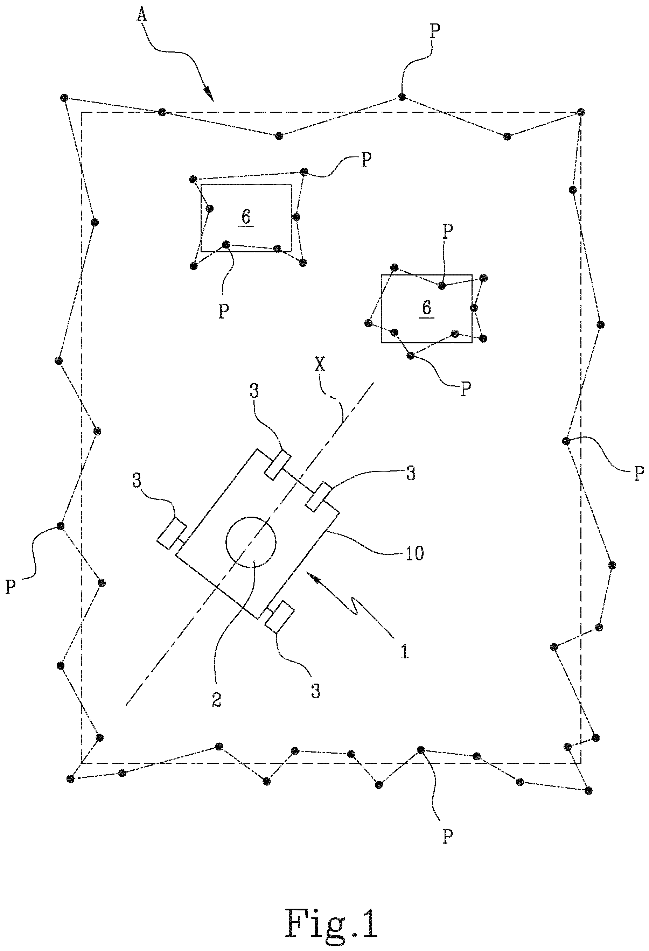

It should be noted that Figure 1 shows the cutting zone A and also the points P detected by the sensor 5; the lines joining the points P are also shown in Figure 1.

Advantageously, the possibility of controlling the robot 1 by means of the control unit U on the basis of the information derived using the processing module 7 and stored in the storage unit 8 allows the robot 1 to be moved autonomously and continuously, knowing the GPS position inside a virtual map which can be continuously updated and improved with precision through the derivation and storage of new points P.

According to a preferred embodiment, in the cases in which: there is no GPS position signal, the precision of the GPS signal is less than a minimum acceptable threshold value or the GPS device 4 is faulty, the control unit U is configured to control the movement means 3 and/or the cutting means 2 only as a function of the obstacles 6 or the presence or absence of grass detected by the sensors 5.

In short, in this situation, the robot 1 does not perform a mapping of the zone in which one of the three above-mentioned conditions has occurred. Advantageously, this feature allows the robot 1 to remain operational even in the presence of problems to the GPS type device 4.

Advantageously, this feature allows the robot 1 to operate in an efficient and safe manner even in the presence of problems to the GPS type device 4. The invention relates to a process for map a cutting zone A, and a relative process for cutting a cutting zone A comprising the mapping process. According to the invention, the mapping process comprises the following steps:
- preparing a robot 1 according to at least one of the aspects described above;
- moving the robot 1 in the cutting zone A;
- deriving, by means of the sensor 5, preferably of the radar or ultrasound type, at least one point P defining an edge or an obstacle 6 in the cutting zone A;
- deriving, using the GPS type device 4, the coordinates of the GPS position of said at least one derived point P;
- storing the coordinates of the GPS position of said at least one point P.

The process for cutting the cutting zone A comprises all the steps of the mapping process and further a step of cutting the cutting zone A, wherein the robot 1 is moved in the cutting zone A as a function of the stored coordinates of the GPS position of said at least one point derived P during cutting.

According to an aspect of the invention, the mapping process comprises a step of storing also a type of said at least one point P between an edge and an obstacle.

According to a preferred embodiment, the mapping process comprises a step of deriving, by means of the sensor 5, a plurality of points P defining edges or obstacles 6 in the cutting zone A.

Preferably, the mapping process comprises a step of deriving, by means of the GPS type sensor 4, the coordinates of the GPS position of a plurality of derived points P.

Preferably, the mapping process comprises a step of storing the coordinates of the GPS position of a plurality of the points P.

According to an aspect of the invention, the mapping process comprises a step of storing also a type between an edge and an obstacle for each point P of the plurality of points P.

The mapping process comprises a step of generating a virtual map of the cutting zone A by means of the GPS coordinates of the position of the points P of the plurality of points P.

According to an aspect of the invention, the step of deriving, using the GPS type device 4, the coordinates of each point P comprises a step of also deriving a precision of said coordinates, using the GPS type device 4.

If the precision corresponding to the derived point P is less than a predetermined value, the localisation information is stored only temporarily. The term "temporarily" means that they are stored only for the purposes of processing and that, if the precision is less than the predetermined value, a long-term storage is not performed.

According to an aspect of the invention, the step of moving the robot 1 in the cutting zone A comprises a step of controlling the movement means 3 and/or the cutting means 2 as a function of the points P and the GPS coordinates stored in the storage unit 8.

In other words, the step of moving the robot 1 in the cutting zone A comprises actuating or stopping the cutting means 2 and modifying or maintaining the feed direction X of the robot 1 as a function of the edge points P of the cutting zone A and/or of an obstacle 6.

Advantageously, mapping the cutting zone A as described allows the robot 1 to know the spatial localisation of the edges of the cutting zone A and of the obstacles 6 inside it without the need to comprise a step of preparing a map and loading it in the robot 1 before placing it in an operating condition. Advantageously, moving the cutting means 2 and the movement means 3 of the robot 1 as a function of the points P and the relative GPS coordinates stored in the storage unit 8 allows the robot 1 to operate independently.

## Claims

1. A lawn mower robot (1), comprising:
- grass cutting means (2) for performing an operation for cutting grass,
- movement means (3) configured for moving the lawn mower robot (1),
- a GPS type device (4), designed to derive coordinates regarding a GPS position of the robot (1),
- at least one sensor (5) configured to detect the presence of grass and/or obstacles (6) in a cutting zone (A),
the lawn mower robot (1) being **characterised in that** the GPS type device (4) is configured to also derive a precision of the GPS position of the robot (1) and also comprises:
- and a processing module (7), coupled to the sensor (5) and to the GPS type device (4), for deriving, by means of said sensor (5), a plurality of points (P) belonging to edges of a cutting zone (A) or defining obstacles (6) in the cutting zone (A), and associating with said points (P) GPS coordinates and precision of the GPS position of the robot (1) derived using the GPS type device (4).

2. The lawn mower robot (1) according to the preceding claim, wherein the GPS type device (4) is of the RTK type.

3. The lawn mower robot (1) according to any one of the preceding claims, wherein the sensor (5) is of the radar or ultrasound type.

4. The lawn mower robot (1) according to any one of the preceding claims, comprising at least a first sensor (5A) configured for detecting the presence of grass and at least a second sensor (5B) configured for detecting the presence of obstacles (6) in the cutting zone (A).

5. The lawn mower robot (1) according to any one of the preceding claims, comprising a storage unit (8) configured for storing the derived points (P), belonging to edges of a cutting zone (A) or defining obstacles (6) in the cutting zone (A), and for also storing the GPS coordinates associated with said points (P).

6. The lawn mower robot (1) according to claim 5, wherein the storage unit (8) is configured for storing the precision of the GPS position of the robot (1) associated with said points (P).

7. The lawn mower robot (1) according to any one of the preceding claims, wherein the movement means (3) are configured for moving the lawn mower robot (1) along a feed direction (X); the lawn mower robot (1) comprises a direction sensor (9) configured for detecting a direction vector corresponding to said feed direction (X).

8. The lawn mower robot (1) according to any one of the preceding claims and claim 5, comprising a control unit (U), operatively connected to the processing module (7), and configured to control the movement means (3) and/or the cutting means (2) as a function of the points (P) and the GPS coordinates stored in the storage unit (8).

9. A process for mapping a cutting zone (A) comprising the following steps:
- preparing a lawn mower robot (1) according to any one of the preceding claims;
- moving said robot (1) in the cutting zone (A);
- deriving, by means of the sensor (5), at least one point (P) defining an edge or an obstacle (6) in the cutting zone (A);
- deriving, using the GPS type device (4), the coordinates of the GPS position of said at least one derived point (P);
- deriving a precision of said coordinates, using the GPS type device (4);
- associating, using the processing module (7), to said at least one GPS point (P) GPS coordinates and precision of the GPS position of the robot (1) derived using the GPS type device (4);
- storing the coordinates of the GPS position of said at least one point (P).

10. The mapping process according to the preceding claim, wherein the step of deriving, using the sensor (5), at least one point (P) defining an edge or an obstacle (6) in the cutting zone (A) comprises a step of deriving, using the sensor (5), a plurality of points (P) defining edges or obstacles (6) in the cutting zone (A); the process also comprises a step of generating a virtual map of the cutting zone (A) using said GPS coordinates of the position of said points (P).

11. The mapping process according to claim 9 or 10, wherein, if said precision corresponding to the derived point (P) is less than a predetermined value, the localisation information is stored only temporarily.

12. The mapping process according to any one of claims 9 to 11, wherein the lawn mower robot (1), set up in the step of preparing a lawn mower robot (1), is set up according to claim 8, and wherein the step of moving said robot (1) in the cutting zone (A) comprises a step of controlling the movement means (3) and/or the cutting means (2) as a function of the points (P) and the GPS coordinates stored in the storage unit (8).

13. A process for cutting a cutting zone (A) comprising all the steps of the mapping process according to any one of claims 9 to 12, and further a step of cutting the cutting zone (A), and wherein the step of moving said robot (1) in the cutting zone (A) comprises moving the robot (1) in the cutting zone (A) as a function of the stored coordinates of the GPS position of said at least one point (P) derived during cutting.

## Amended claims

### Amended claims in accordance with Rule 137(2) EPC.

1. A lawn mower robot (1), comprising:
- grass cutting means (2) for performing an operation for cutting grass,
- movement means (3) configured for moving the lawn mower robot (1),
- a GPS type device (4), designed to derive coordinates regarding a GPS position of the robot (1) and a precision of the GPS position of the robot (1),
- at least one sensor (5) configured to detect the presence of grass and/or obstacles (6) in a cutting zone (A),
- a processing module (7), coupled to the sensor (5) and to the GPS type device (4), for deriving, by means of said sensor (5), a plurality of points (P) belonging to edges of a cutting zone (A) or defining obstacles (6) in the cutting zone (A), and associating with said points (P) GPS coordinates and precision of the GPS position of the robot (1) derived using the GPS type device (4);
the lawn mower robot (1) being **characterised in that** it comprises:
- a storage unit (8) configured for storing said derived points (P) and the GPS coordinates associated with said points (P), if the point (P), or a boundary of it, is derived for a predetermined number of times.

2. The lawn mower robot (1) according to the preceding claim, wherein the GPS type device (4) is of the RTK type.

3. The lawn mower robot (1) according to any one of the preceding claims, wherein the sensor (5) is of the radar or ultrasound type.

4. The lawn mower robot (1) according to any one of the preceding claims, comprising at least a first sensor (5A) configured for detecting the presence of grass and at least a second sensor (5B) configured for detecting the presence of obstacles (6) in the cutting zone (A).

5. The lawn mower robot (1) according to any one of the preceding claims, wherein the storage unit (8) is configured for storing the precision of the GPS position of the robot (1) associated with said points (P).

6. The lawn mower robot (1) according to any one of the preceding claims, wherein the movement means (3) are configured for moving the lawn mower robot (1) along a feed direction (X); the lawn mower robot (1) comprises a direction sensor (9) configured for detecting a direction vector corresponding to said feed direction (X).

7. The lawn mower robot (1) according to any one of the preceding claims and claim 5, comprising a control unit (U), operatively connected to the processing module (7), and configured to control the movement means (3) and/or the cutting means (2) as a function of the points (P) and the GPS coordinates stored in the storage unit (8).

8. A process for mapping a cutting zone (A) comprising the following steps:
- preparing a lawn mower robot (1) according to any one of the preceding claims;
- moving said robot (1) in the cutting zone (A);
- deriving, by means of the sensor (5), at least one point (P) defining an edge or an obstacle (6) in the cutting zone (A);
- deriving, using the GPS type device (4), the coordinates of the GPS position of said at least one derived point (P);
- deriving a precision of said coordinates, using the GPS type device (4);
- associating, using the processing module (7), to said at least one GPS point (P) GPS coordinates and precision of the GPS position of the robot (1) derived using the GPS type device (4);
- storing said at least one point (P) and the coordinates of the GPS position of said at least one point (P), if the point (P), or a boundary of it, is derived for a predetermined number of times.

9. The mapping process according to the preceding claim, wherein the step of deriving, using the sensor (5), at least one point (P) defining an edge or an obstacle (6) in the cutting zone (A) comprises a step of deriving, using the sensor (5), a plurality of points (P) defining edges or obstacles (6) in the cutting zone (A); the process also comprises a step of generating a virtual map of the cutting zone (A) using said GPS coordinates of the position of said points (P).

10. The mapping process according to claim 8 or 9, wherein, if said precision corresponding to the derived point (P) is less than a predetermined value, the localisation information is stored only temporarily.

11. The mapping process according to any one of claims 8 to 10, wherein the lawn mower robot (1), set up in the step of preparing a lawn mower robot (1), is set up according to claim 7, and wherein the step of moving said robot (1) in the cutting zone (A) comprises a step of controlling the movement means (3) and/or the cutting means (2) as a function of the points (P) and the GPS coordinates stored in the storage unit (8).

12. A process for cutting a cutting zone (A) comprising all the steps of the mapping process according to any one of claims 8 to 11, and further a step of cutting the cutting zone (A), and wherein the step of moving said robot (1) in the cutting zone (A) comprises moving the robot (1) in the cutting zone (A) as a function of the stored coordinates of the GPS position of said at least one point (P) derived during cutting.
